# EUROPEAN PATENT APPLICATION

(11) **EP 4 617 969 A1**
(43) Date of publication of application: **17.09.2025**
(21) Application number: 24162726.4
(22) Date of filing: 11.03.2024
(51) Int. Cl.: G06Q 10/083, G06Q 10/0833, G06Q 10/087, G06K 19/07, G06K 19/077, G07G 1/00, G01N 33/46

(54) **SYSTEM FOR TAGGING WOOD, AND METHOD OF TRACKING WOOD**

(71) Applicant: Simtrona d.o.o., 5000 Nova Gorica (SI)
(72) Inventor: STEGEL, Simon, 5000 Nova Gorica (SI)
(74) Representative: Mewburn Ellis LLP

(57) **Abstract**

A method of tracking wood is provided. The method comprises tagging a plurality of wood elements by inserting a respective electronic tag into each wood element, wherein each electronic tag is associated with a respective entry in a database. The plurality of wood elements are loaded onto a transport vehicle, and the transport vehicle is passed through a checkpoint. The method further comprises obtaining, with an antenna system of the checkpoint, identification information from the electronic tag in each of the plurality of wood elements loaded on the transport vehicle. A report is then generated based on a comparison between the database and the identification information obtained by the antenna system of the checkpoint. Additionally, a system for tagging wood is provided.

## Description

### Field of the Invention

The present invention relates to a system for tagging wood, and in particular for inserting an electronic tag into wood. Further provided is a method of tracking wood that is loaded onto a transport vehicle, using electronic tags inserted into the wood.

### Background

Wood, such as a log or a tree, can be tagged with an electronic tag to facilitate identification of the wood. For example, a Radio Frequency Identification (RFID) tag can be applied to a piece of wood. An RFID tag reader can then be used to read the RFID tag, to identify the piece of wood.

EP2816508A2 discloses an example of an RFID tag that can be used for identifying wood. The RFID tag has a body with a tip to facilitate driving the tag into the wood, and RFID electronics housed in the body. The body can be made of a material similar to wood, such as a compound of resin and cellulose fibres.

The present invention has been devised in light of the above considerations.

### Summary of the Invention

At its most general, the invention provides systems and methods for tagging wood, to enable traceability of wood across an entire wood supply chain. In this manner, it is possible to reliably determine the history of a piece of wood (timber), such as its place of origin and/or where it was processed. This can, for example, help to verify that timber is from a sustainable source, and prevent timber from unsustainable or illegal sources from being integrated into the supply chain.

In a first aspect of the invention, there is provided a system for tagging wood, the system comprising: a magazine configured to store a plurality of electronic tags, and to individually dispense each of the plurality of tags; a tag applicator; and a pneumatic conveying system, configured to receive an electronic tag dispensed from the magazine, and to convey the electronic tag to the tag applicator; wherein the tag applicator comprises: an insertion tool for inserting an electronic tag received from the pneumatic conveying system into wood; and a tag reader configured to communicate with the electronic tag following insertion of the electronic tag into the wood.

Providing a magazine which stores a plurality of electronic tags facilitates dispensing the electronic tags to the tool applicator, thus enabling wood to be rapidly tagged by the system. Advantageously, as the tag applicator is connected to the magazine via a pneumatic conveying system, the tag applicator and magazine can be remote from one another. This can facilitate integration of the tag application system with a wood processing machine, whilst ensuring safety of the operator. For example, the magazine can be located in a main body or operator cabin of the wood processing machine, whilst the tag applicator can be outside the operator cabin, e.g. integrated with a wood processing tool of the machine. In this manner, an operator of the machine can easily and safely load tags into the magazine from the operator cabin, without having to exit the operator cabin to directly access the tag applicator. Furthermore, the combination of a magazine and a tag applicator with an insertion tool may facilitate and speed up a process of tagging wood elements. This may also improve a reliability and consistency of tagging of the wood elements, e.g. as compared to a manual process for inserting the electronic tag which may be time consuming and not always reliable.

The magazine is configured to store a plurality of the electronic tags, and to individually (i.e. sequentially) dispense the electronic tags to the pneumatic conveying system. For example, the magazine may comprise a tag holder configured to hold the plurality of electronic tags, and a dispensing mechanism configured to individually dispense the electronic tags via an outlet of the magazine. The magazine may be adapted to a shape of the electronic tags to be used with the system.

Each electronic tag may comprise a communication antenna which is connected to a processor and/or memory module. For example, the electronic tag may be an RFID tag.

The electronic tag may have a tag identifier. For example, the memory module may store identification information associated with the electronic tag. The memory module may also store other types of data, examples of which are given below.

The plurality of electronic tags may be stackable, to facilitate stacking of the plurality of the electronic tags in the magazine. For example, each electronic tag may have a plate-like or flat body, so that the electronic tags can be stacked. Each electronic tag may have a pointed tip, to facilitate driving the electronic tag into wood. The electronic tags may be made of any suitable material.

In one example, the electronic tag may comprise an identification as described in EP2816508A2, which is incorporated herein by reference.

The pneumatic conveying system may be connected to the outlet of the magazine to receive each individually dispensed electronic tag. The pneumatic system uses compressed air to convey the electronic tag from the magazine to the tag applicator. For example, a pneumatic tube (or passageway) may be connected between the magazine and the applicator, with the pneumatic system being configured to push the electronic tag along the pneumatic tube with compressed air. The use of a pneumatic conveying system enables the electronic tags to be conveyed over relatively large distances between the magazine and the applicator, enabling the two parts of the system to be remote from one another. The pneumatic system may comprise any suitable source of compressed air, such as a compressed air cylinder or an air compressor. The

tag applicator is connected to the pneumatic conveying system to receive the electronic tag conveyed by the pneumatic conveying system. The insertion tool is configured to insert the received electronic tag into wood. Any suitable type of insertion tool may be used. The insertion tool may be configured to push (or press) the electronic tag into the wood, to insert the electronic tag into the wood.

The insertion tool may comprise an actuation mechanism which is operable to insert the electronic tag into the wood with the insertion tool. For example, the actuation mechanism may comprise a hydraulic, pneumatic, and/or electrical actuation mechanism.

Following insertion of the electronic tag, the electronic tag may be partially embedded in the wood. In some cases, the insertion tool may be configured to completely embed the electronic tag in the wood, e.g. so that the electronic tag does not protrude from a surface of the wood. The insertion tool may be configured to embed the electronic tag in the wood at a predetermined depth in the wood. The predetermined depth may be adjustable, i.e. the insertion tool may be controllable to set the depth at which the electronic tag is embedded in the wood. Embedding the electronic tag in the wood may avoid the electronic tag being damaged, e.g. during transport of the wood. Controlling the depth at which the electronic tag is embedded may facilitate reading the electronic tag with a tag reader.

The tag reader is configured to communicate with the electronic tag following insertion of the electronic tag into the wood. In this manner, an identifier of electronic tag can be read and associated with the piece of wood, e.g. in a database. This may facilitate subsequent tracking of the piece of wood as it moves through the supply chain.

Communication of the tag reader with the electronic tag may be one-way or two-way communication. For example, in some cases, the tag reader may be configured to write information to the electronic tag. This could include a variety of information, such as a date and/or time when the tagging occurred, geographical location where the tagging occurred, type of wood, and/or authentication data.

As the tag reader is integrated with the insertion tool in the tag applicator, this facilitates communication with the electronic tag directly after the electronic tag is inserted into the wood. This may facilitate automated tagging of wood, and contribute to reliable and efficient recording of a tagging event.

Both the insertion tool and the tag reader may be disposed in a housing of the tag applicator, such that the tag applicator may be a relatively compact device. For example, the tag reader may be located adjacent to the insertion tool in the housing.

Herein, wood may refer to any type of wood, including live wood (e.g. a tree), timber, wood logs, or any other type of cut wood.

The pneumatic conveying system may comprise a flexible pneumatic tube connected between the magazine and the tag applicator for conveying the electronic tag dispensed from the magazine. In this manner, flexibility of the pneumatic tube enables the tag applicator to move relative to the magazine. This facilitates integrating the system with wood processing machinery. For example, the tag applicator may be mounted at an end of a mechanical arm, whilst the magazine can be located in an operator cabin. The flexible pneumatic tube may, for example, be in the form of a flexible hose or the like. The flexible pneumatic tube may be made of any suitable flexible material, such as a flexible rubber or plastic material, and/or the flexible pneumatic tube may comprise a flexible metal tube.

The flexible pneumatic tube may be connected between an outlet of the magazine, and an inlet of the tag applicator, with the magazine being configured to dispense individual electronic tags via the outlet.

The system may further comprise a controller configured to control operation of the tag applicator, the controller being remote from the tag applicator. Thus, the controller may control operation of the insertion tool and of the tag reader. In this manner, operation of the tag applicator can be fully controlled by (or via) the controller, which is remote from the tag applicator. In other words, the controller is at a remote location compared to the tag applicator. This avoids a user having to get near the tag applicator to control the tag applicator, which could be dangerous particularly where heavy machinery is being used to process the wood. For example, the controller could be located with (adjacent to) the tag magazine, e.g. in the operator cabin of the wood processing machine.

The controller may be configured to read and/or write information on the electronic tag with the tag reader. The controller may be configured to control the actuation mechanism of the insertion tool, to control insertion of the electronic tag into wood.

The controller may be implemented via any suitable computing system. The controller may be communicatively coupled to the tag applicator to control the tag applicator, e.g. via a wired or wireless connection. The controller may be configured to automatically control operation of the tag applicator, i.e. so that operation of the tag applicator is automated. Additionally or alternatively, the controller may comprise one or more user inputs, to allow a user to manually control operation of the tag applicator via the controller.

The system may further comprise a communication cable connecting the controller to the tag applicator; and a flexible cord, wherein at least a portion of the flexible pneumatic tube and the communication cable extend within the flexible cord. In this manner, both the flexible pneumatic tube and the communication cable may extend within a common flexible cord. This facilitates connecting the magazine and the controller to the tag applicator, as the flexible cord can carry both the flexible pneumatic tube and the communication cable for all or most of the distance to the tag applicator. Accordingly, both the magazine and the controller can be located at a first (proximal) end of the flexible cord, and the tag applicator can be located at a second (distal) end of the flexible cord.

The flexible cord may, for example, comprise an outer sheath that surrounds the flexible pneumatic tube and the communication cable.

The communication cable may be configured to provide communication between the controller and the tag reader. Additionally or alternatively, the communication cable may be configured to transmit a control signal from the controller to the actuation mechanism of the insertion tool to control operation of the insertion tool. The communication cable may thus comprise separate signal paths for the tag reader and the insertion tool, respectively.

The system may further comprise a wood processing machine comprising: a main body including controls for controlling operation of wood processing machine; and a mechanical arm connected to the main body, and having a wood processing tool at a distal end of the mechanical arm; wherein the applicator is located at the distal end of the mechanical arm, and the magazine is located in the main body. In this manner, the tagging system is integrated with the wood processing machine. In line with the above, as the magazine is in the main body, this can easily be accessed by an operator of the machine (e.g. for reloading), without having to go to the distal end of the mechanical arm.

The wood processing machine may comprise various types of wood processing machine, such as a tree feller, a tree harvester, or other wood cutting or processing machine.

The main body of the wood processing machine may comprise an operator cabin (or area), including controls for controlling operation of the wood processing machine. The main body may also typically include an engine (motor) for powering the wood processing machine, as well as means of locomotion. For example, the main body may include wheels and/or treads for driving the wood processing machine.

The mechanical arm may be an articulated arm which is controllable to move the wood processing tool at the distal end of the mechanical arm. The wood processing tool may comprise any suitable type of wood processing tool, such as a wood cutting tool, log grabber, de-brancher, or the like.

The tag applicator may be located at the distal end of the mechanical arm with the wood processing tool. In this manner, the electronic tag may be inserted into the wood as part of a wood processing task being performed by the machine. With the magazine being located in the main body, an operator of the machine can easily load electronic tags into the magazine to perform tagging of the wood, without having to leave the main body. In some cases, the tag applicator may be provided on, or integrated with, the wood processing tool.

The controller mentioned above may also be included in the main body, e.g. next to the magazine.

Where the system includes a flexible pneumatic tube, the flexible pneumatic tube may extend along the mechanical arm. This may ensure reliable connection between the magazine and the tag applicator, and avoid the flexible pneumatic tube from becoming tangled. For example, the flexible pneumatic tube may be secured at one or more points along the mechanical arm.

Similarly, where a flexible cord is provided, the flexible cord may extend along the mechanical arm.

The insertion tool may comprise: a channel cutter configured to form a channel in the wood, the channel extending to a predetermined depth in the wood; and a pushing member configured to push the electronic tag into the channel. In this manner, the channel cutter can first cut a channel in the wood, following which the pushing member can push the electronic tag into the channel. This may facilitate embedding the electronic tag at a predetermined depth in the wood. Additionally, using a channel cutter to form the channel in the wood may mean that a smaller, more delicate, electronic tag can be used, as the tag itself need not cut or pierce the wood.

The pushing member may, for example, comprise a piston or the like which is extendable to push the electronic tag into the channel formed by the channel cutter.

The channel cutter may comprise a pair of blades, with an insertion passage being defined between the pair of blades; the insertion tool may be configured to press the pair of blades into the wood to form the channel in the wood; the pushing member may be configured to push the electronic tag through the insertion passage between the pair of blades to insert the electronic tag into the channel in the wood. In this manner, the pair of blades may serve to hold the channel in the wood open during insertion of the electronic tag. Following pushing of the electronic tag through the passage between the pair of blades, the pair of blades can be removed from the wood to leave the electronic tag in the wood. Once the blades are removed from the wood, the channel may re-close itself, to enclose the electronic tag in the wood.

The channel cutter may be controllable to adjust the predetermined depth of the channel, to control a depth at which the electronic tag is embedded in the wood. In this manner, the depth at which the electronic tag is embedded in the wood can be adjusted to ensure effective tagging. For example, the depth at which the electronic tag is embedded could be adjusted based on a diameter of the piece of wood being tagged, and/or to ensure efficient reading by the tag reader. In some cases, the depth at which the electronic tag is embedded could be adjusted based on a debarking process, e.g. to ensure that the embedded electronic tag is not affected by the debarking process. The depth of the channel may be controlled, for instance, by adjusting a stroke length of the channel cutter (e.g. of the pair of blades).

The insertion tool may be configured to insert the electronic tag through a side surface of the wood. Thus, for example, where the piece of wood is a log or a tree trunk, the tag may be inserted through a side surface of the log or tree trunk, as opposed to through an end face. This may facilitate tagging the wood, as the side surface may be more readily accessible during processing of the wood than cut end faces. Moreover, as discussed further below, inserting the electronic tag through the side surface may facilitate subsequent communication with the electronic tag.

Herein, the side surface of the wood refers to a surface which has (or previously had) bark. This is in contrast to cut end faces of pieces of wood.

Following insertion of the electronic tag into the wood, the tag reader may be configured to communicate with the electronic tag to read data stored in the electronic tag and/or write data to the electronic tag. In this manner, communication with the tag may be performed automatically following insertion of the electronic tag into the wood. This avoids a user having to separately read the tags after they have been inserted, thus speeding up and improving a reliability of the tagging process. In line with the above, the tag reader may be configured to obtain a tag identifier stored in the electronic tag, and/or the tag reader may be configured to write information such as date and/or time when the tagging occurred, geographical location where the tagging occurred, type of wood, dimensions of wood, and/or authentication data.

Following communication of the tag reader with the electronic tag, the system may be configured to store information associated with the electronic tag in a database. In this manner, the system may automatically record information associated with the electronic tag after its insertion into the wood. This may facilitate subsequent tracking of the wood. For example, the system may be configured to store the tag identifier associated with the electronic tag in the database. The system may further store information such as date and/or time when the tagging occurred, geographical location where the tagging occurred, type of wood, dimensions of wood, and/or authentication data.

The storing of information in the database may be performed by the controller of the system. The database may be a local database, e.g. stored in a memory of the controller. Alternatively, the database may be an online database, with the controller being configured to access the database via a wireless communication network.

According to a second aspect of the invention, there is provided a method of tracking wood, the method comprising: tagging a plurality of wood elements by inserting a respective electronic tag into each wood element, wherein each electronic tag is associated with a respective entry in a database; loading the plurality of wood elements onto a transport vehicle; passing the transport vehicle through a checkpoint and obtaining, with an antenna system of the checkpoint, identification information from the electronic tag in each of the plurality of wood elements loaded on the transport vehicle; generating a report based on a comparison between the database and the identification information obtained by the antenna system of the checkpoint.

In this manner, the plurality of tagged wood elements can be tracked after being tagged, for example while they are in transit on the transport vehicle. This may improve traceability of the tagged wood elements, by automatically reading the electronic tags of the wood elements on the transport vehicle at the checkpoint. In this manner, if wood elements are missing from the transport vehicle, or if electronic tags are detected which do not match the database, this may be reflected in the generated report so that a user will become aware of an issue in the wood supply chain.

The plurality of wood elements may be tagged using electronic tags as discussed in relation to the first aspect. In some cases, the system of the first aspect may be used for tagging the plurality of wood elements, although other techniques for inserting the electronic tags may also be used.

The database comprises an entry for each electronic tag. For example, the entry may associate an identifier of the electronic tag with further data such as date and/or time when the tagging occurred, geographical location where the tagging occurred, type of wood, dimensions of wood, and/or authentication data.

The transport vehicle may, for example, comprise a truck (lorry), a train, or any other type of vehicle suitable for transporting wood.

Here, a wood element refers to a piece of cut wood, such as a wood log, timber, or other types of wood cuts or processed wood.

The checkpoint corresponds to a location on a transport route of the transport vehicle. The checkpoint may, for example, be located at an exit to a logging site, on a road (or track) taken by the transport vehicle, or at a delivery site of the transport vehicle. The checkpoint may comprise a gate through which the transport vehicle is driven. The antenna system may be mounted on the gate.

The antenna system is configured to read the electronic tags in the wood elements loaded onto the transport vehicle. The antenna system may, for example, comprise one or more radio communication antennas configured to read the electronic tags. Once the identification information (i.e. tag identifiers) is obtained from the electronic tags, this is compared against the database. For example, the tag identifiers obtained at the checkpoint can be compared against the tag identifiers stored in the database, to verify that all of the expected tag identifiers are present, and/or if there are any new tag identifiers that are not stored in the database. A report is then generated and output based on the comparison.

The respective electronic tag may be embedded below a surface of the wood element. Thus, the electronic tag may not protrude from the surface of the wood element. This may serve to ensure that the electronic tag does not become damaged or fall out when the wood element is loaded onto the transport vehicle. Additionally, this may ensure that the tag does not become damaged or fall out during a de-barking process. For instance, the electronic tag may be embedded below a layer of bark of the wood. This may improve a reliability of reading the electronic tags when the transport vehicle passes through the checkpoint.

The respective electronic tag may be inserted into the wood element via a side surface of the wood element. This may facilitate rapid tagging of the wood elements, as the side surface may correspond to an outer surface of the tree. Moreover, this enables the electronic tag to be embedded just below the side surface of the wood element. This may reduce a thickness of wood between the electronic tags and the antenna system, thus facilitating reading of the electronic tags by the antenna system. Inserting the electronic tag into the wood element via the side surface also enables the wood element to be tagged whilst the tree is still standing.

The respective electronic tag may be inserted into the wood element via the side surface of the wood element, such that the respective electronic tag is spaced from an end face of the wood element. This may facilitate reading the electronic tag when the wood element is loaded onto a transport vehicle, as it may ensure that the electronic tag is spaced away from a bulkhead of the transport vehicle. The bulkhead of the transport vehicle may typically comprise a metal plate which acts as a radiofrequency shield which interferes with communication with the electronic tag. Accordingly, spacing the electronic tag away from the bulkhead improves a reliability with which the electronic tag can be read when the wood element is loaded onto the transport vehicle.

The respective tag may be inserted into the wood element such that the electronic tag is oriented in a predetermined orientation relative to the wood element. The predetermined orientation may be selected so as to optimise reading of the tag by the antenna system when the wood element is loaded onto the transport vehicle. As an example, a longitudinal direction of the electronic tag may be substantially aligned with a longitudinal direction of the wood element, as such an arrangement may improve an ability of the antenna system to detect the electronic tag. Here, the longitudinal direction of the electronic tag may correspond to a direction along a longest side of the electronic tag.

The respective electronic tag may be inserted into the wood element at a predetermined distance from an end face of the wood element. In this manner, each wood element in the transport vehicle may have an electronic tag inserted at the predetermined distance from its end face, which may facilitate reading of all the electronic tags when the transport vehicle passes through the checkpoint. In particular, this facilitates lining up electronic tags of multiple wood elements when they are loaded onto the transport vehicle, so that the multiple tags can be read as part of a same reading sequence with the antenna system.

As noted above, tagging the plurality of wood elements may be performed with the system of the first aspect of the invention. Thus, any features described in relation to the first aspect of the invention may be shared with the method of the second aspect, and vice versa. Advantageously, using the system of the first aspect enables rapid tagging and updating of the database, due to the integration of the insertion tool and the tag reader in the tag applicator.

Where the tagging system is part of a wood processing machine, the respective tag may inserted into the wood element as part of processing of the wood element by the wood processing machine. Thus, no further tagging of the wood element is needed once it has been processed by the wood processing machine, so that it can be loaded directly onto the transport vehicle.

The transport vehicle may comprise a start marker located at a front of the plurality of wood elements, which can be detected by the antenna system to trigger a reading sequence of the antenna system. Similarly, the transport vehicle may comprise an end marker at a rear of the plurality of wood elements, such the antenna system ends the reading sequence when it detects the end marker. In this manner, a reading sequence for detecting the electronic tags in the transport vehicle may be automatically triggered when the transport vehicle passes through thecheckpoint.

The antenna system may comprise a plurality of antennas having overlapping read zones so as to cover an entire cross-section of a load volume of the transport vehicle. This may ensure that all of the electronic tags in the wood elements on the transport vehicle can be read by the antenna system. In particular, arranging the antennas so that they have overlapping read zones may avoid blind spots where electronic tags would not be detected. The cross-section of the load volume of the transport vehicle refers to a cross-section in a direction normal to a direction of travel of the transport vehicle. Thus, as the transport vehicle passes through the check point, the entire load volume can be read by the antenna system.

The plurality of antennas may be arranged such that each point within the cross-section of the load volume of the transport vehicle lies within the read zone of at least two of the antennas. This may improve a detection efficiency of the antenna system. In some cases, each point within the cross-section of the load volume may lie within a read angle of one or more (e.g. two) further antennas. Thus, a given point within the cross-section of the load volume may be within the read zone of at least two antennas, and within a read angle of one or more further antennas. This may increase a likelihood detecting electronic tags distributed throughout the load volume. The one or more further antennas may be further from the given point than the at least two antennas.

Herein, a read zone of an antenna may correspond to a zone in which the antenna can reliably detect and read information from an electronic tag. The read zone may be defined by a read angle of the antenna, and a predetermined distance from the antenna. Of course, the antenna may also be capable of detecting an electronic tag outside its read zone. An electronic tag lying within the read angle of an antenna, but beyond the predetermined distance (i.e. such that it is outside the antenna's read zone), may still be detectable by the by the antenna, but with a lower likelihood of detection compared to when the electronic tag is within the read zone of the antenna. Likewise, an electronic tag lying outside the antenna's read angle may still be detectable by the antenna, albeit with a lower likelihood of detection.

Generating the report may comprise performing an authentication process for each electronic tag detected by the antenna system. For example, an authentication process may be performed with the identification information obtained from each electronic tag at the checkpoint, for example by determining if the identification information matches authentication data stored in the database. For instance, a manufacturer of the electronic tag, or a system administrator, may have previously added identification information corresponding to the electronic tag to the database. The report may then comprise an indication of an outcome of the authentication process for each of the detected electronic tags.

If the authentication process fails for an electronic tag, then an alert may be generated. This may serve to automatically notify a user that one of the electronic tags was not properly authenticated, e.g. because the electronic tag does not match information stored on the database. This may indicate that the corresponding wood element was added in error to the transport vehicle.

Generating the report may comprise determining if each of the plurality of wood elements is present in the transport vehicle. For example, the method can check if an electronic tag corresponding to each of the entries in the database is detected. This may serve to ensure that no wood elements have gone missing during transport.

If one or more of the plurality of wood elements are determined to be missing from the transport vehicle, then an alert may be generated. This may serve to automatically notify a user that one or more of the plurality of wood elements is missing. The alert may further provide information indicative of the one or more missing wood elements, e.g. the alert may provide identification information associated with the electronic tags of the missing wood elements. This may facilitate locating the missing wood elements.

In some cases, the transport vehicle may go through multiple checkpoints, each having a respective antenna system for reading the electronic tags. A report may then be generated for each checkpoint, so that the load of the transport vehicle can be automatically checked at various points along its route.

For example, the method may comprise passing the transport vehicle through one or more of the following checkpoints: a first checkpoint located at an exit to a logging site, a second checkpoint located on a road (or track) taken by the transport vehicle, a third checkpoint located at a delivery site of the transport vehicle. Each checkpoint may comprise a respective antenna system configured to obtain identification information from the electronic tag in each of the plurality of wood elements loaded on the transport vehicle. The method may then generate a respective report for each checkpoint, based on a comparison between the database and the identification information obtained by the antenna system of that checkpoint.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
Fig. 1 shows a schematic diagram of a system for tagging wood according to an embodiment of the invention;
Fig. 2 shows a schematic perspective view of a magazine of the system of Fig. 1;
Fig. 3 shows a cross-sectional view of the magazine of Fig. 2;
Fig. 4 shows a schematic perspective view of a tag applicator of the system of Fig. 1;
Figs. 5-8 show schematic cross-sectional views of the tag applicator of Fig. 4, at various stages in a process of inserting an electronic tag into wood;
Fig. 9 shows a flow diagram of a method according to an embodiment of the invention;
Fig. 10 shows an example environment in which the method of Fig. 9 can be applied; and
Fig. 11 shows a schematic diagram of an antenna system for a checkpoint used in the method of Fig. 9, according to an example.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

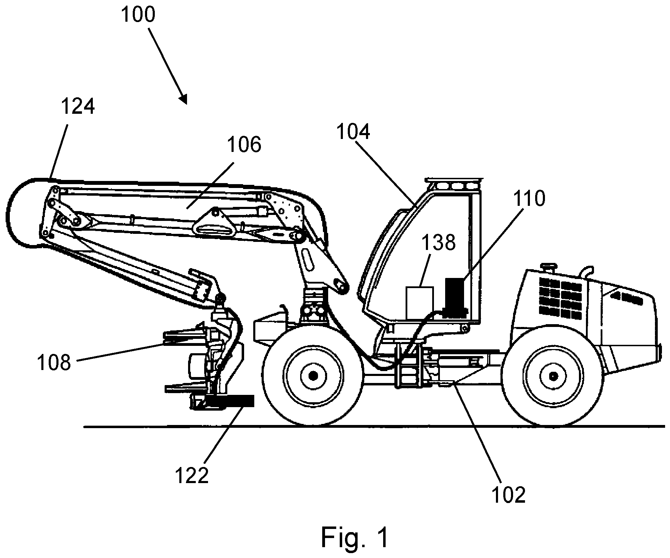

Fig. 1 shows a system 100 for tagging wood according to an embodiment of the invention. The system 100 is implemented as part of a wood processing machine, which may for example be a harvester or feller machine. The wood processing machine includes a main body 102 which includes an operator cabin 104, which may comprise a seat and controls for controlling the wood processing machine. An engine is further provided in the main body 102 for powering the machine, and wheels are connected to the main body 102 for driving the machine. A mechanical arm 106 is connected to the main body 102, the mechanical arm 106 having a wood processing tool 108 mounted at a distal end of the mechanical arm 106. The wood processing tool 108 may, for example, comprise one or more of a wood cutting tool, a wood gripper, a de-branching tool, and a de-barking tool. Operation of the mechanical arm 106 and the wood processing tool 108 can be controlled via the controls in the operator cabin 104.

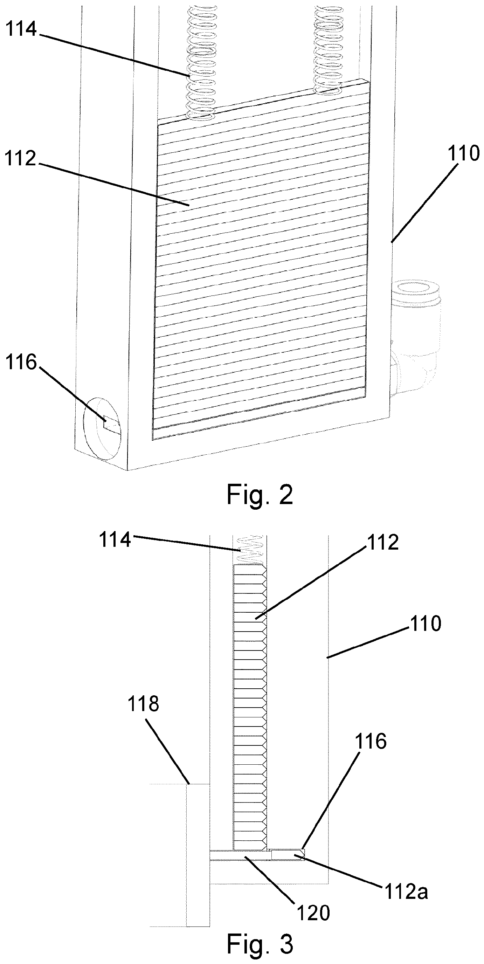

The system 100 includes a magazine 110 configured to store a plurality of electronic tags 112, such as RFID tags, and to individually dispense to stored electronic tags. As shown, the magazine 110 is located in the operator cabin 104, such that it can be accessed and loaded with electronic tags by a user located in the operator cabin 104. Fig. 2 shows a perspective view of the magazine 110 according to an example. The magazine 110 includes a chamber in which the plurality of electronic tags 112 are stacked. A pair of springs 114 is arranged to press the stack of electronic tags 112 towards an end of the magazine where an outlet channel 116 of the magazine is located. A cross-sectional view of the magazine 110 is shown in Fig. 3. As can be seen, the electronic tags 112 have a flat body, so that they can be stacked within the magazine 110. Additionally, the electronic tags 112 have a pointed tip, which may facilitate insertion of the tags into wood. Each electronic tag 112 includes a communication antenna and a memory module which stores a unique identifier stored with the tag. The electronic tags 112 may be constructed, for example, as described in EP2816508A2. The magazine 110 further includes a tag dispenser 118 (shown in Fig. 3), which is configured to push the bottom-most tag in the stack into the outlet channel 116 of the magazine 110, to dispense the electronic tag. For example, the tag dispenser 118 can include a piston having a pushing element 120 that protrudes into the magazine chamber, such that the piston can be extended to cause the pushing element 120 to push the bottom-most tag into the outlet channel 116. In Fig. 3, the tag dispenser 118 is shown in the extended position, such that a bottom-most tag 112a is pushed into the outlet channel 116.

The system 100 further includes a tag applicator 122 which is mounted at the distal end of the mechanical arm 106. For example, the tag applicator 122 may be mounted on the wood processing tool 108, or otherwise integrated with the wood processing tool 108 at the distal end of the mechanical arm 106. The tag applicator 122 is connected to the magazine 110 via a pneumatic conveying system, which is configured to convey electronic tags dispensed by the magazine 110 to the tag applicator 122. In more detail, the pneumatic conveying system includes a flexible pneumatic tube 124 which is connected at one end to the outlet channel 116 of the magazine 110, and at another end to an inlet of the tag applicator 122. The flexible pneumatic tube 124 extends along the mechanical arm 106, and is secured to the mechanical arm 106 so as to prevent it from getting in the way of the wood processing tool 108. The flexible pneumatic tube 124 defines a lumen through which individual electronic tags 112 can pass. A source of compressed air (not shown), such as a compressed air tank or an air compressor, is connected to the outlet channel 116 of the magazine 110, to push the electronic tag 112a dispensed into the outlet channel 116 along the flexible pneumatic tube 124 and into the tag applicator 122.

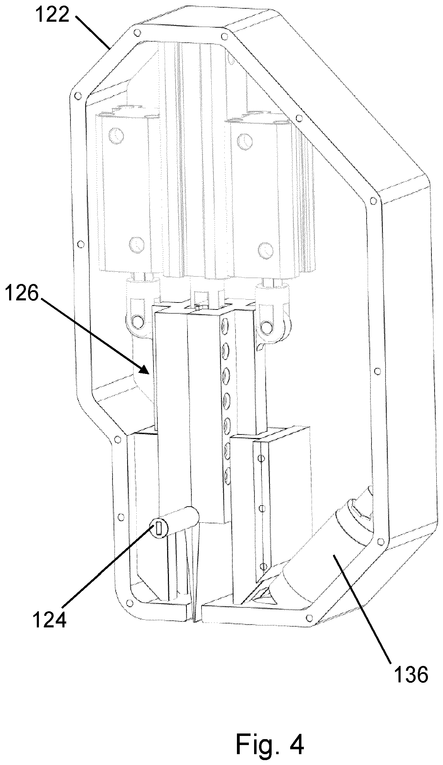

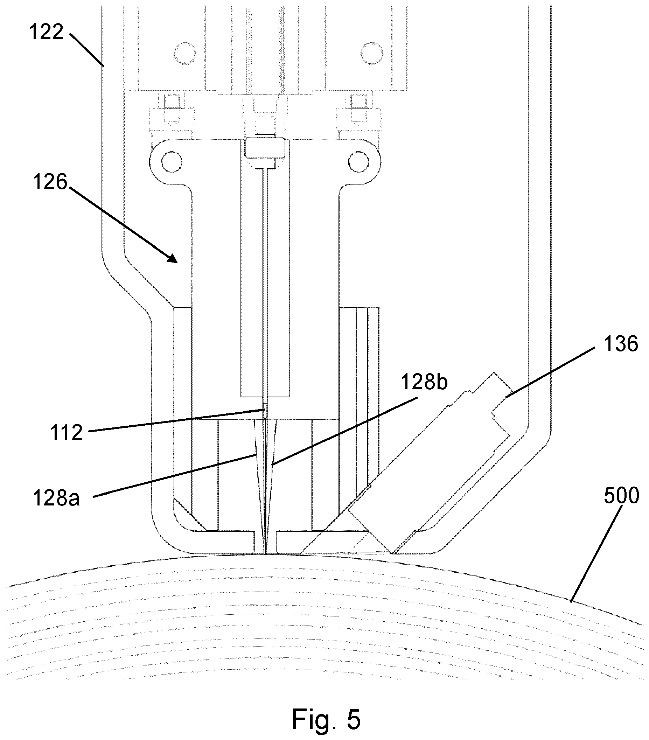

A perspective view of the tag applicator 122 is shown in Fig. 4, where a cover of the tag applicator 122 is removed to show its internal structure. Also shown in Fig. 4 is the distal end of the pneumatic tube 124 which is connected to the tag applicator 122, to convey the electronic tag dispensed by the magazine 110 to the tag applicator 122. The tag applicator 122 is configured to insert the received electronic tag 112 into wood, to embed the electronic tag at a predetermined depth in the wood. In particular, the tag applicator includes an insertion tool 126 for inserting the electronic tag into the wood. An operation of the insertion tool 126 is illustrated in Figs. 5-8. The insertion tool 126 includes a pair of blades 128a, 128b, which are configured to cut a channel in the wood. Prior to insertion of the electronic tag into the wood 500, the tag applicator 122 is positioned over the wood 500 with the pair of blades 128a, 128b in a retracted position (i.e. so that they do not protrude from the housing of the tag applicator), as shown in Fig. 5. The blades 128a, 128b are spaced by a gap, such that an insertion passage is defined between the blades 128a, 128b. The electronic tag 112 received from the flexible pneumatic tube 124 is received in the gap (insertion passage) between the blades 128a, 128b.

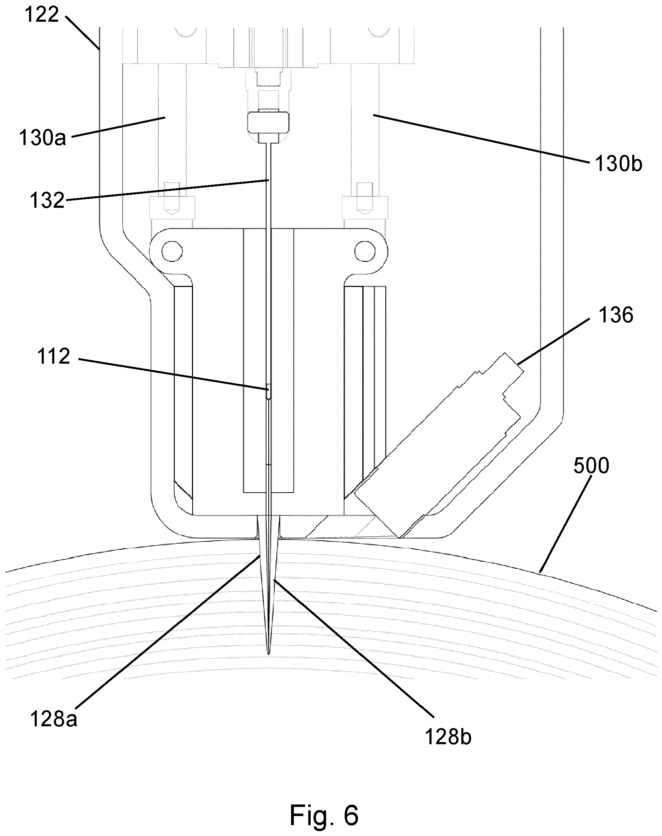

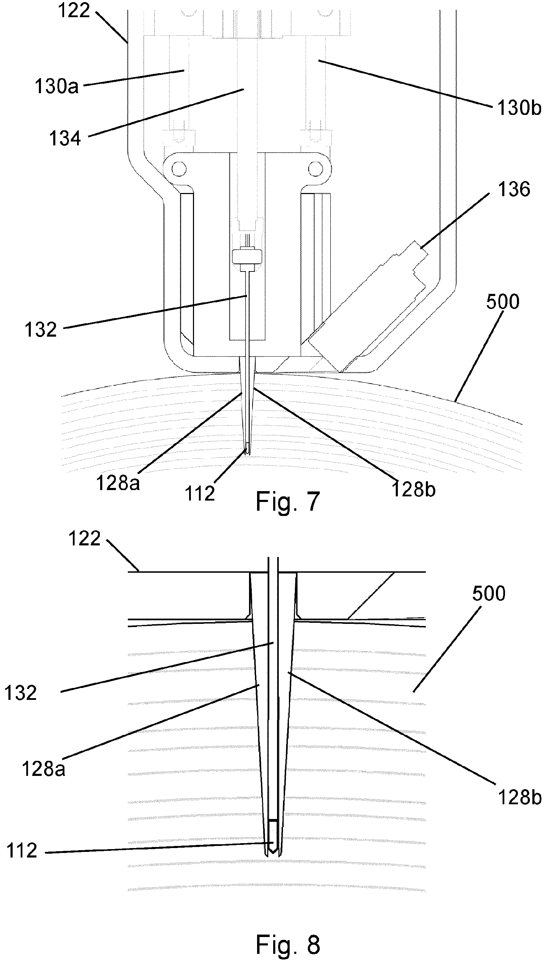

The pair of blades 128a, 128b is connected to an actuation mechanism comprising a pair of hydraulically or pneumatically controlled pistons 130a, 130b. To insert the electronic tag 112 into the wood 500, the actuation mechanism is operated to advance the pair of blades 128a, 128b into the wood 500 by extending the pistons 130a, 130b. This cuts a channel in the wood 500, as shown in Fig. 6. An extension of the pistons 130a, 130b can be controlled, to control a depth of the channel cut in the wood 500, to set a depth at which the electronic tag 112 is inserted into the wood 500. Next, as shown in Fig. 7, a pushing member 132 of the tag applicator 122 pushes the electronic tag 112 along the insertion passage between the pair of blades 128a, 128b, to insert the electronic tag 112 into the wood. An expanded view of the electronic tag 112 pushed towards an end of the insertion passage by the pushing member 132 is shown in Fig. 8. The pushing member 132 is connected to a hydraulically or pneumatically controllable piston 134, such that the piston can be extended to push the electronic tag 112 along the insertion passage. The pushing member 132 can, for example, include a rod which is arranged to fit in the insertion passage to push the electronic tag 112 along the insertion passage when the piston 134 is extended. Finally, the pair of blades 128a, 128b and the pushing member 132 can be withdrawn from the wood 500, to leave the electronic tag 112 embedded within the wood 500. The channel or opening formed in the wood 500 by the blades 128a, 128b may naturally close or reseal itself when the blades 128a, 128b are removed, preventing the electronic tag 112 from falling out of the wood 500.

In the example shown in Figs. 5-8, the wood 500 is a wood log. As can be seen, the electronic tag 112 is inserted through a side surface of the wood which has (or previously had) bark. In other words, the tag 112 is not inserted into a cut end of the log. The wood processing tool 108 and the tag applicator 122 can be controlled so that the electronic tag 112 is inserted into the wood 500 such that it is spaced apart from an end cut of the piece of wood 500, e.g. at a predetermined distance from the end cut of the piece of wood 500, to provide a consistent tagging location and facilitate subsequent reading of the electronic tag. Furthermore, in the example, shown, the electronic tag 112 is inserted into the wood such that a longest dimension of the electronic tag 112 is substantially aligned with a longitudinal axis of the piece of wood 500, which may facilitate subsequent reading of the electronic tag 112.

The tag applicator 122 further includes a tag reader 136, which is mounted adjacent to the insertion tool 126, and which is configured to communicate with the electronic tag 112 following insertion of the electronic tag 112 into the wood 500. Thus, after the blades 128a, 128b and the pushing member 132 are withdrawn from the wood 500, the tag reader 136 communicates with the electronic tag 112 to read information from, and/or store information on, the electronic tag 112. The tag reader 136 may comprise a communication module with an antenna configured to communicate with the electronic tag 112.

Returning to Fig. 1, the system 100 can further include a controller 138, which may be located in the operator cabin 104 or elsewhere in the main body 102 of the wood processing machine. The controller is configured to control operation of the system 100, including dispensing of tags by the magazine 110, conveying of tags along the flexible pneumatic tube 124, insertion of tags with the insertion tool 126, and communication with tags using the tag reader 136. The controller 138 may be implemented with one or more suitable computing devices, having control software installed thereon. The controller 138 can control operation of the system, for example, by sending control signals to various parts of the system. In order to control the tag applicator 122 (including the insertion tool 126 and the tag reader 136), the controller 138 may be connected to the tag applicator 122 via a communication cable. The communication cable may extend in parallel with the flexible pneumatic tube 124 along the mechanical arm 106 to the tag applicator 122. In some cases, both the flexible pneumatic tube 124 and the communication cable may be housed within a flexible cord which extends along the mechanical arm 106, to simplify connecting the tag applicator 122 to the controller 138 and magazine 110. The communication cable between the controller 138 and tag applicator 122 may comprise a first cable (signal path) for transmitting a control signal for controlling the insertion tool 126, and a second cable (signal path) for controlling communication of the tag reader 136 with the electronic tag 112.

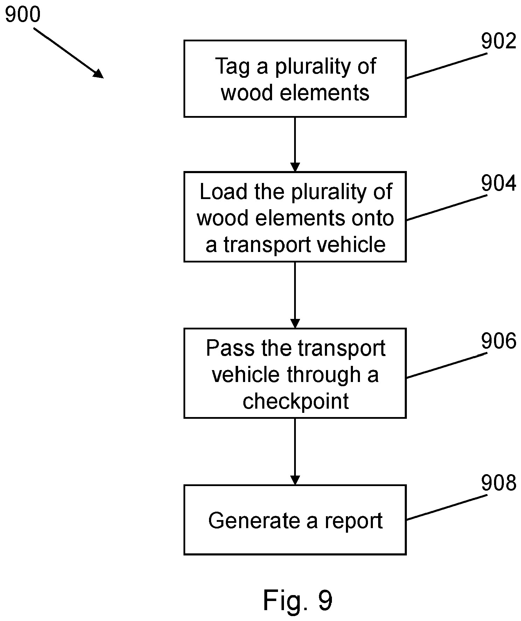

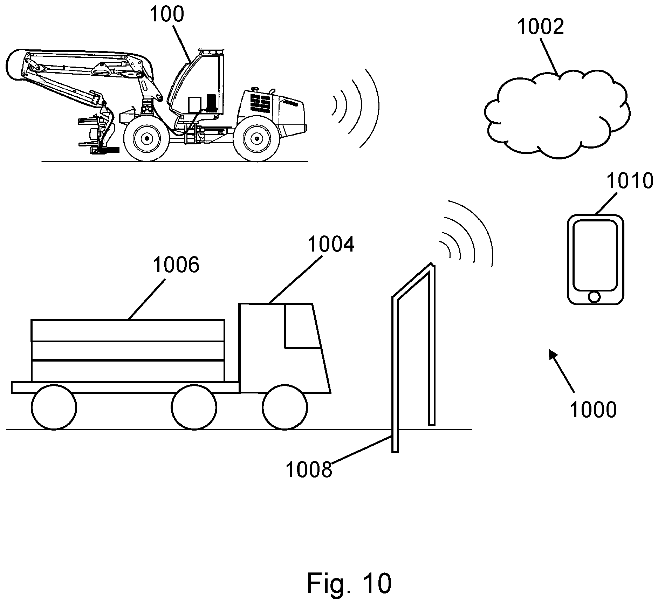

Fig. 9 shows a flow diagram of a method 900 according to an embodiment of the invention. An example environment 1000 in which the method 900 can be implemented is illustrated in Fig. 10. In a first step 902, the method 900 includes tagging a plurality of wood elements by inserting a respective electronic tag into each wood element. This may be performed using the wood tagging system 100 described above. In particular, a tag may be inserted into each wood element with the tag applicator 122 prior, during, or immediately after processing of the wood element with the wood processing tool 108. The plurality of wood elements may refer to a plurality of wood logs or other types of timber. For example the wood processing machine may be operating on a work site to process wood (e.g. live trees or cut trees) into wood logs, with each log being tagged as part of its processing. In some cases, there may multiple wood processing machines operating on the work site, each of which includes a respective tagging system.

After an electronic tag is inserted into a wood element, the system 100 communicates with the electronic tag using the tag reader 136, to obtain a unique identifier stored on the electronic tag. The system 100 then updates a database with information relating to tagging of the wood element. The database may thus comprise an entry which associates the unique identifier of the electronic tag with the information relating to the tagging of the wood element. For example, the system 100 may store in the entry information such as date and/or time when the wood element was tagged, an indication of a geographical location the work site where the wood element was tagged, an identifier associated with the wood processing machine that was used for processing the wood element, an indication of an owner of the work site, and/or any other information that may be useful for tracing the wood element. Optionally, the tag reader 136 may also be configured to communicate with the electronic tag to store similar information in the memory of the tag itself. In the example shown in Fig. 10, the database may be hosted on a cloud server 1002. The controller 138 of the system 100 may therefore be configured to communicate with the cloud server 1002 via the internet, e.g. using a wireless communication network. Alternatively, the database may be stored on a local network, or in a memory of the controller 138 itself. Accordingly, following tagging of the plurality of wood elements (e.g. logs), the database includes a plurality of entries, each corresponding to a respective one of the wood elements, and including information relating to tagging of that wood element.

In line with the above discussion the plurality of wood elements (e.g. logs) can be tagged by inserting the electronic tag through a side surface of the wood element, such that the electronic tag is embedded below the surface of the wood element. Moreover, the electronic tags can be located at a predefined distance from an end cut of each wood element, to provide a consistent location of the electronic tag across the plurality of wood elements.

At step 904, the method 900 comprises loading (e.g. stacking) the plurality of wood elements onto a transport vehicle 1004. For example, the transport vehicle 1004 may be a truck (lorry), or other suitable type of transport vehicle. When each wood element is loaded onto the transport vehicle 1004, the entry in the database corresponding to that wood element may be updated to associate that wood element with an identifier of the transport vehicle1004. For example, if the wood processing machine is used to load the wood element onto the transport vehicle 1004, the controller 138 can communicate with the database to update the database. Fig. 10 illustrates a plurality of wood elements 1006 (e.g. wood logs) loaded onto the transport vehicle 1004.

The plurality of wood elements 1006 may be loaded onto the transport vehicle 1004 in a manner such that ends of the wood elements are aligned with one another. In this manner, as the electronic tags are embedded in the wood elements at a predefined distance from the ends of the wood elements, the electronic tags of the plurality of wood elements may be at similar longitudinal positions with respect to a length of the transport vehicle 1004.

Following loading of the plurality of wood elements 1006 onto the transport vehicle 1004 at the work site, the transport vehicle may be driven to a second site, e.g. where the plurality of wood elements 1006 are to be delivered for use or further processing. When the transport vehicle 1004 is in transit between the work site and the second site, the method 900 comprises at step 906 of passing the transport vehicle 1004 through a checkpoint 1008. The checkpoint 1008 may be located at any suitable location along the transport vehicle's journey from the work site to the second (delivery) site. As an example, the checkpoint 1008 may be located at an exit to the work site, at an entrance to the second side, or on a road between the work site and the second site. In some cases, the transport vehicle 1004 may pass through multiple checkpoints between the work site and the second site. The checkpoint 1008 may, for example, comprise a gate, passage or barrier through which the transport vehicle 1004 passes.

The checkpoint 1008 comprises an antenna system which is configured to read the electronic tags embedded in the plurality of wood elements 1006 loaded on the transport vehicle 1004. As the transport vehicle 1004 passes through the checkpoint 1008, the antenna system reads the electronic tags in the plurality of wood elements 1006 to obtain information from each electronic tag. In particular, the antenna system is configured to obtain the unique identifier stored in each electronic tag. The checkpoint 1008 or antenna system then transmits the identifiers obtained from the electronic tags to the cloud server 1002, e.g. via a wireless communication network. The cloud server 1002 is configured to check the received tag identifiers against the tag identifiers stored in the database that are associated with the identifier of the transport vehicle 1004. In this manner, the cloud server 1002 can verify that all of the wood elements that were loaded onto the transport vehicle 1004 are still present. The cloud server 1002 can also detect if any of the tag identifiers received from the antenna system do not match any of the tag identifiers in the database which are associated with the transport vehicle's identifier.

The method 900 further includes, at step 908, generating a report based on the comparison of the received tag identifiers with database. For example, the cloud server 1002 can generate a report indicating tag identifiers of the wood elements that were detected by the antenna system. The cloud server may also update the database entry for each detected tag identifier to provide an indication of the tag identifier being detected at the checkpoint 1008. The report may, for example, be transmitted to a user device 1010 via the internet, e.g. so that a system supervisor can review the report. The system supervisor may, for example, be a human supervisor, or an algorithm (e.g. a machine learning model) configured to supervise and maintain the system. If the cloud server 1002 determines that one or more tag identifiers that are associated in the database with the transport vehicle's identifier are missing, the cloud server 1002 may generate an alert or a warning. Likewise, if the cloud server 1002 determines that one or more identifiers detected by the antenna system do not match any of the identifiers associated in the database with the transport vehicle's identifier, the cloud server 1002 may generate an alert. Such an alert may, for example, be in the form of a notification being sent to the user device 1010 to notify the system supervisor.

Whilst in the above steps were described as being performed by the cloud server 1002, they could be implemented by different parts of the system in other examples. For example, in some cases, the database may be stored and managed locally on the user device 1010, which may be implemented using any suitable computing device.

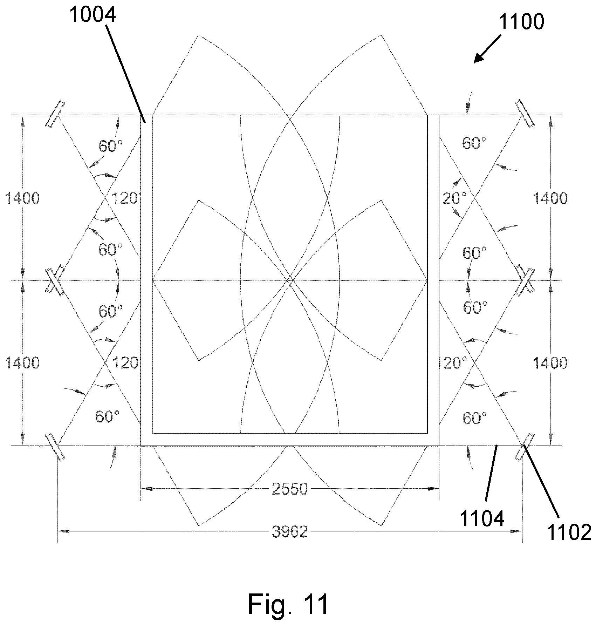

Fig. 11 shows an example antenna system 1100 that may be used for the checkpoint 1008. The antenna system 1100 comprises an array of antennas 1102 which are arranged to detect electronic tags located within a load volume of the transport vehicle 1004. Each antenna has a respective read zone, in which it can reliably detect and read information from an electronic tag. The antennas 1102 are arranged so as to have overlapping read zones 1104, such that an entire cross-section of the load volume of the transport vehicle is covered by the overlapping read zones. This avoids any blind spots, to ensure effective reading of electronic tags within the load volume. For example, Fig. 11 depicts a cross-section of a load volume of the transport vehicle 1004, the cross-section being in a direction normal to a direction of forward travel of the transport vehicle 1004. As can be seen, everywhere within the cross-section of the load volume is covered by the read zone of at least two of the antennas 1102, which may improve a reading efficiency of the antenna system 1100. Additionally, each point within the cross-section of the load volume lies within the read angle of two further antennas. In this manner, an electronic tag at a given location in the load volume may have a chance of being detected by four antennas 1102. In the example shown in Fig. 11, each antenna 1102 has a 60° read angle, with example dimensions of spacings between the antennas shown in millimetres allowing for the cross-section of a load volume of a typical transport vehicle to be completely covered. For example, the antennas 1102 may be 9dBi antennas with a 60° read angle. Of course, other antenna arrangements may be used, e.g. depending on dimensions of the transport vehicle used. Note that an antenna 1102 may be capable of detecting an electronic tag lying outside of its read angle. The read angle of an antenna represents an optimal range of angles for detecting the electronic tag with the antenna. Similarly, the read zone of an antenna represents an optimal zone for detecting an electronic tag with the antenna, and the antenna may be capable of detecting electronic tags lying outside its read zone.

As noted above, as the electronic tags are embedded in the wood elements at a predefined distance from the ends of the wood elements, the electronic tags of the plurality of wood elements may be at similar longitudinal positions with respect to a length of the transport vehicle 1004. In this manner, all of the tags may be detected as part of a same read sequence with the antenna system, enabling rapid and effective reading of the tags in the load volume. The transport vehicle 1004 may comprise a start marker located at a front of the plurality of wood elements 1006, which can be detected by the antenna system 1100 to trigger a reading sequence of the antenna system 1100. Similarly, the transport vehicle 1004 may comprise an end marker at a rear of the plurality of wood elements 1006, such the antenna system 1100 ends the reading sequence when it detects the end marker.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method of tracking wood, the method comprising:
tagging a plurality of wood elements by inserting a respective electronic tag into each wood element, wherein each electronic tag is associated with a respective entry in a database;
loading the plurality of wood elements onto a transport vehicle;
passing the transport vehicle through a checkpoint and obtaining, with an antenna system of the checkpoint, identification information from the electronic tag in each of the plurality of wood elements loaded on the transport vehicle;
generating a report based on a comparison between the database and the identification information obtained by the antenna system of the checkpoint.

2. A method according to claim 1, wherein the respective electronic tag is embedded below a surface of the wood element.

3. A method according to claim 1 or 2, wherein the respective electronic tag is inserted into the wood element via a side surface of the wood element; and optionally
wherein the respective electronic tag is inserted into the wood element at a predetermined distance from an end face of the wood element.

4. A method according to any preceding claim, wherein tagging the plurality of wood elements is performed with a wood tagging system comprising:
a magazine configured to store a plurality of electronic tags, and to individually dispense each of the plurality of tags;
a tag applicator; and
a pneumatic conveying system, configured to receive an electronic tag dispensed from the magazine, and to convey the electronic tag to the tag applicator;
wherein the tag applicator comprises:
an insertion tool for inserting an electronic tag received from the pneumatic conveying system into wood; and
a tag reader configured to communicate with the electronic tag following insertion of the electronic tag into the wood.

5. A method according to claim 4, wherein the wood tagging system further comprises a wood processing machine, and wherein the respective tag is inserted into the wood element as part of processing of the wood element by the wood processing machine.

6. A method according to any preceding claim, wherein the antenna system comprises a plurality of antennas having overlapping read zones so as to cover an entire cross-section of a load volume of the transport vehicle.

7. A method according to any preceding claim, wherein:
generating the report comprises performing an authentication process for each electronic tag detected by the antenna system; and optionally
generating an alert if the authentication process fails for an electronic tag.

8. A method according to any preceding claim, wherein generating the report comprises determining if each of the plurality of wood elements is present in the transport vehicle; and optionally
generating an alert if one or more of the plurality of wood elements are determined to be missing from the transport vehicle.

9. A system for tagging wood, the system comprising:
a magazine configured to store a plurality of electronic tags, and to individually dispense each of the plurality of tags;
a tag applicator; and
a pneumatic conveying system, configured to receive an electronic tag dispensed from the magazine, and to convey the electronic tag to the tag applicator;
wherein the tag applicator comprises:
an insertion tool for inserting an electronic tag received from the pneumatic conveying system into wood; and
a tag reader configured to communicate with the electronic tag following insertion of the electronic tag into the wood.

10. A system according to claim 9, wherein the pneumatic conveying system comprises a flexible pneumatic tube connected between the magazine and the tag applicator for conveying the electronic tag dispensed from the magazine.

11. A system according to claim 9 or 10, further comprising a wood processing machine comprising:
a main body including controls for controlling operation of wood processing machine; and
a mechanical arm connected to the main body, and having a wood processing tool at a distal end of the mechanical arm;
wherein the applicator is located at the distal end of the mechanical arm, and the magazine is located in the main body.

12. A system according to one of claims 9 to 11, wherein the insertion tool comprises:
a channel cutter configured to form a channel in the wood, the channel extending to a predetermined depth in the wood; and
a pushing member configured to push the electronic tag into the channel.

13. A system according to claim 12, wherein:
the channel cutter comprises a pair of blades, with an insertion passage being defined between the pair of blades;
the insertion tool is configured to press the pair of blades into the wood to form the channel in the wood;
the pushing member is configured to push the electronic tag through the insertion passage between the pair of blades to insert the electronic tag into the channel in the wood.

14. A system according claim 12 or 13, wherein the channel cutter is controllable to adjust the predetermined depth of the channel, to control a depth at which the electronic tag is embedded in the wood.

15. A system according to one of claims 9 to 14, wherein following insertion of the electronic tag into the wood, the tag reader is configured to communicate with the electronic tag to read data stored in the electronic tag and/or write data to the electronic tag.
